(19) Europäisches Patentamt
European Patent Office
Office européen des brevets

(11) EP 1 427 284 B1

(12) EUROPÄISCHE PATENTSCHRIFT

(45) Veröffentlichungstag und Bekanntmachung des Hinweises auf die Patenterteilung:
**08.06.2005 Patentblatt 2005/23**

(21) Anmeldenummer: **02776967.8**

(22) Anmeldetag: **03.09.2002**

(51) Int Cl.[7]: **A01N 43/32**
// (A01N43/32, 47:24, 43:88, 43:54), A01N37:50

(86) Internationale Anmeldenummer:
**PCT/EP2002/009835**

(87) Internationale Veröffentlichungsnummer:
**WO 2003/022053 (20.03.2003 Gazette 2003/12)**

# (54) FUNGIZIDE MISCHUNGEN

FUNGICIDAL MIXTURES

MELANGES FONGICIDES

(84) Benannte Vertragsstaaten:
**AT BE BG CH CY CZ DE DK EE ES FI FR GB GR IE IT LI LU MC NL PT SE SK TR**
Benannte Erstreckungsstaaten:
**LT LV MK RO SI**

(30) Priorität: **12.09.2001 DE 10144991**

(43) Veröffentlichungstag der Anmeldung:
**16.06.2004 Patentblatt 2004/25**

(73) Patentinhaber: **BASF AKTIENGESELLSCHAFT 67056 Ludwigshafen (DE)**

(72) Erfinder:
- **AMMERMANN, Eberhard 64646 Heppenheim (DE)**
- **STIERL, Reinhard 67251 Freinsheim (DE)**
- **LORENZ, Gisela 67434 Neustadt (DE)**
- **STRATHMANN, Siegfried 67117 Limburgerhof (DE)**
- **STAMMLER, Gerd 69221 Dossenheim (DE)**
- **SCHELBERGER, Klaus 67161 Gönnheim (DE)**
- **BIRNER, Erich 67317 Altleiningen (DE)**
- **APPEL, Josef 67112 Mutterstadt (DE)**

(56) Entgegenhaltungen:

| | |
|---|---|
| **WO-A-00/36921** | **WO-A-99/48467** |
| **DE-A- 3 602 317** | **US-A- 5 468 747** |

- **DATABASE CAB [Online] CAB INTERNATIONAL, WALLINGFORD, OXON, GB; I,CLABASSI ET AL.: "Efficiency of new preparations for control of apple scab" retrieved from STN-INTERNATIONAL Database accession no. 2001:51706 CABA XP002225623 & NOTIZIARIO ERSA, Bd. 13, Nr. 6, 2000, Seiten 45-48,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 427 284 B1

**Beschreibung**

Die vorliegende Erfindung betrifft fungizide Mischungen, enthaltend

A) mindestens einen Strobilurin-Wirkstoff ausgewählt aus

a1) Carbamaten der Formel I,

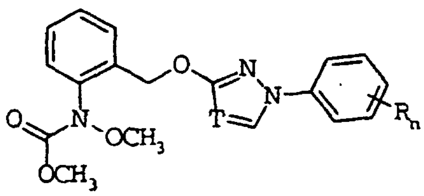

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und/oder

a2) den Phenylessigsäurederivaten der Formeln IIa bis IIf

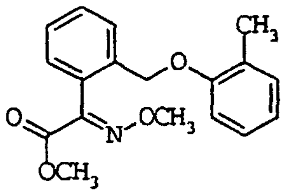

IIa

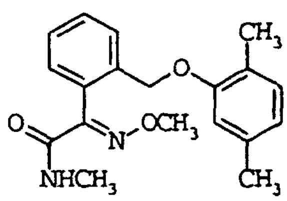

IIb

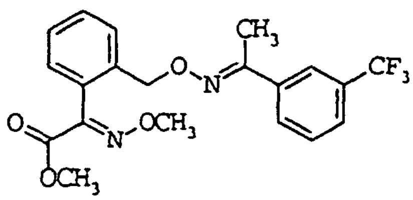

IIc

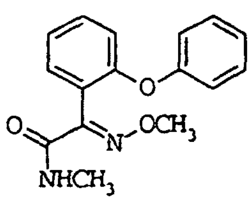

IId

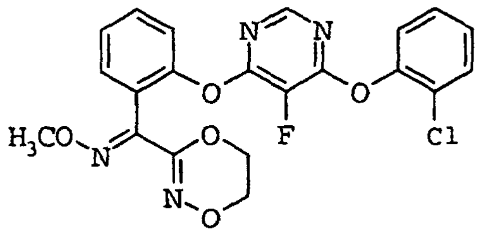

IIe

und

B) die Verbindung der Formel III

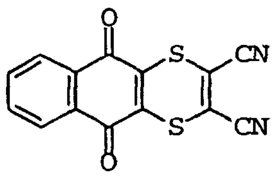

III

in einer synergistisch wirksamen Menge.

Außerdem betrifft die Erfindung Verfahren zur Bekämpfung von Schadpilzen mit Mischungen der Verbindungen I und/oder IIa-e und III und die Verwendung der Verbindungen I und/oder IIa-e und III zur Herstellung derartiger Mischungen.

Die Verbindungen der Formel I, ihre Herstellung und ihre Wirkung gegen Schadpilze sind aus der Literatur bekannt (WO-A 96/01256 und 96/01258).

Die Formel I repräsentiert insbesondere Carbamate, in denen die Kombination der Substituenten einer Zeile der folgenden Tabelle entspricht:

Tabelle 1:

| Nr. | T | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |

Tabelle 1: (fortgesetzt)

| Nr. | T | $R_n$ |
|---|---|---|
| I.17 | N | $3-CH(CH_3)_2$ |
| I.18 | N | $4-CH(CH_3)_2$ |
| I.19 | N | $2-CF_3$ |
| I.20 | N | $3-CF_3$ |
| I.21 | N | $4-CF_3$ |
| I.22 | N | 2,4-F2 |
| I.23 | N | $2,4-Cl_2$ |
| I.24 | N | 3,4-C12 |
| I.25 | N | $2-Cl, 4-CH_3$ |
| I.26 | N | $3-Cl, 4-CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | $2-CH_3$ |
| I.37 | CH | $3-CH_3$ |
| I.38 | CH | $4-CH_3$ |
| I.39 | CH | $2-CH_2CH_3$ |
| I.40 | CH | $3-CH_2CH_3$ |
| I.41 | CH | $4-CH_2CH_3$ |
| I.42 | CH | $2-CH(CH_3)_2$ |
| I.43 | CH | $3-CH(CH_3)_2$ |
| I.44<br>I.45 | CH<br>CH | $4-CH(CH_3)_2$<br>$2-CF_3$ |
| I.46 | CH | $3-CF_3$ |
| I.47 | CH | $4-CF_3$ |
| I.48 | CH | $2,4-F_2$ |
| I.49 | CH | $2,4-Cl_2$ |
| I.50 | CH | $3,4-Cl_2$ |
| I.51 | CH | $2-Cl, 4-CH_3$ |
| I.52 | CH | $3-Cl, 4-CH_3$ |

Die Verbindungen der Formeln IIa-e, ihre Herstellung und ihre Wirkung gegen Schadpilze sind ebenfalls aus der Literatur bekannt.

Die Verbindungen II sind insbesondere bekannt aus:

| Nr. | common name | Literatur |
|---|---|---|
| IIa | kresoxim-methyl | EP-A 253 213 |
| IIb | dimoxystrobin | EP-A 477 631 |
| IIc | trifloxystrobin | EP-A 460 575 |
| IId | metominostrobin | EP-A 398 692 |
| IIe | fluoxastrobin | WO-A 97/27189 |

Besonders bevorzugt werden die Verbindungen I.12, I.23, I.32 und I.38. Insbesondere bevorzugt werden Mischungen, die die Verbindung I.32 (common name: Pyraclostrobin) enthalten. In einer anderen Ausführungsform der erfindungsgemäßen Mischungen ist die Verbindung der Formel IIa bevorzugt.

Die Verbindung der Formel III (common name: dithianon) sowie Verfahren zu ihrer Herstellung sind in der GB-A 857 383 beschrieben.

Aus Notiziaro Ersa, Bd. 13, Nr. 6, S. 45-48 (2000), US 5 468 747 und DE 36 02 317 sind Mischungen von Dithianon mit anderen Wirkstoffen bekannt. In WO 00/36921 werden Mischungen bestimmter Strobilurinderivate mit verschiedenen anderen Wirkstoffen beschrieben.

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und/oder IIa-e und III oder bei Anwendung der Verbindungen I und/oder IIa-e und III nacheinander Schadpilze besser bekämpfen lassen als mit den Einzelverbindungen.

Die Verbindungen der Formel IIa-e können in Bezug auf die C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindung der Oximethergruppierung in der Seitenkette der Verbindung IIc kann als reines E- oder Z-Isomere oder als E/Z-Isomerengemisch vorliegen. Die Verbindungen IIa-e können sowohl als Isomerengemische als auch als reine Isomere in den erfindungsgemäßen Mischungen verwendet werden.

Die Verbindungen I und IIa-e sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und/oder IIa-e und III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und/oder IIa-e und III bzw. die gleichzeitige gemeinsame oder getrennte

Verwendung der Verbindungen I und/oder IIa-e und III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: *Erysiphe graminis* (echter Mehltau) an Getreide, *Erysiphe cichoracearum* und *Sphaerotheca fuliginea* an Kürbisgewächsen, *Podosphaera leucotricha* an Äpfeln, *Uncinula ne cator* an Reben, *Puccinia*-Arten an Getreide, *Rhizoctonia*-Arten an Baumwolle, Reis und Rasen, *Ustilago*-Arten an Getreide und Zuckerrohr, *Venturia inaequalis* (Schorf) an Äpfeln, *Helminthosporium*-Arten an Getreide, *Septoria nodorum* an Weizen, *Botrytis cinerea* (Grauschimmel) an Erdbeeren, Gemüse, Zierpflanzen und Reben, *Cercospora arachidicola* an Erdnüssen, *Pseudocercosporella herpotrichoides* an Weizen und Gerste, *Pyricularia oryzae* an Reis, *Phytophthora infestans* an Kartoffeln und Tomaten, Pseudoperonospora-Arten an Kürbisgewächsen und Hopfen, *Plasmopara viticola* an Reben, Alternaria-Arten an Gemüse und Obst sowie *Fusarium*- und *Verticillium*-Arten.

Sie sind außerdem im Materialschutz (z.B. Holzschutz) anwendbar, beispielsweise gegen *Paecilomyces variotii*.

Die Verbindungen I und/oder IIa-e und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und/oder IIa-e und III werden üblicherweise in einem Gewichtsverhältnis von 10:1 bis 1: 100, vorzugsweise 1:1 bis 1:20, insbesondere 1:1 bis 1:10 (I und/oder IIa-e : III) angewandt.

Die Aufwandmengen der erfindungsgemäßen Mischungen liegen je nach Art des gewünschten Effekts für die Verbindungen I und/oder IIa-e bei 5 g/ha bis 500 g/ha, vorzugsweise 50 bis 500 g/ha, insbesondere 50 bis 200 g/ha.

Die Aufwandmengen für die Verbindung III liegen entsprechend in der Regel bei 5 bis 2000 g/ha, vorzugsweise 10 bis 1000 g/ha, insbesondere 50 bis 750 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und/oder IIa-e oder der Mischungen aus den Verbindungen I und/oder IIa-e und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und/oder IIa-e und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und/oder IIa-e und III oder der Mischung aus den Verbindungen I und/oder IIa-e und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder IIa-e und III bzw. der Mischung aus den Verbindungen I und/oder IIa-e und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und/oder IIa-e und III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und/oder IIa-e und III bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Der Wirkungsgrad (**W**) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Anwendungsbeispiel 1 - Wirksamkeit gegen Apfelschorf (*Venturia inaequalis* an Apfelbäumen)

Die Blätter von Freiland-Apfelbäumen der Sorte "Golden Delicious" wurden im Laufe einer Sommersaison achtmal im Abstand von 10 bis 16 Tagen mit einer wässrigen Suspension, die aus einer Stammlösung bestehend aus 10 % Wirkstoff, 85 % Cyclohexanon und 5 % Emulgiermittel oder Mischungen von Wirkstoffen in dem unten angegebeneren Verhältnis angesetzt wurde, bis zur Blattbenetzung besprüht. Entsprechend dem natürlichen Infektionsdruck erfolgte periodisch die Infektion der Blätter durch Zuflug oder durch Benetzung mit wässriger Sporenaufschwemmungen von *Venturia inaequalis*. Die Umweltklimabedingungen unterstützten die Entwicklung der Blattschorfes so stark, dass zum Zeitpunkt der Auswertung gegen Ende der Saison praktisch alle Blätter mit Schorf befallen waren. Der Befall wurde visuell in % ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. ("Calculating synergistic and antagonistic responses of herbicide Combinations", Weeds, 15,

Die Ergebnisse der Versuche zeigen, daß der beobachtete Wirkungsgrad in allen Fällen höher ist als der nach der Colby-Formel vorausberechnete Wirkungsgrad.

## Patentansprüche

1. Fungizide Mischung, enthaltend

A) mindestens einen Strobilurin-Wirkstoff ausgewählt aus

a1) Carbamaten der Formel I,

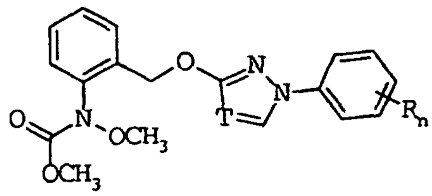

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und/oder

a2) den Phenylessigsäurederivaten der Formeln IIa bis IIe

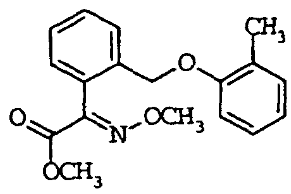

IIa

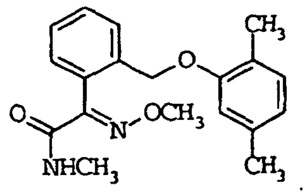

IIb

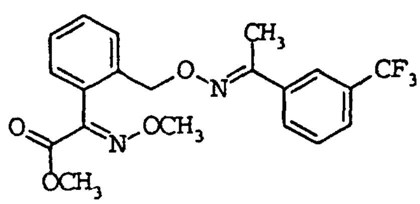

IIc

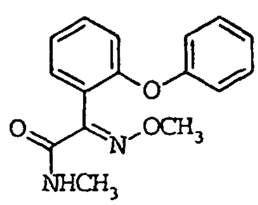

IId

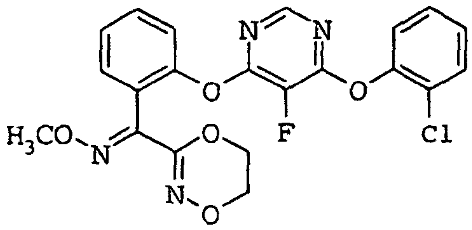

IIe

und

B) die Verbindung der Formel III

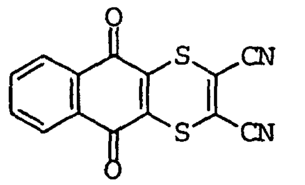

III

in einer synergistisch wirksamen Menge.

2. Fungizide Mischungen nach Anspruch 1, enthaltend die Verbindung I.32.

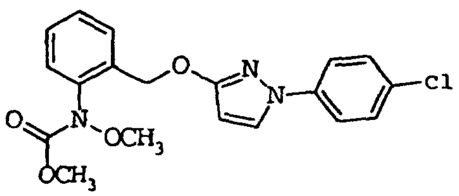

I.32

3. Fungizide Mischungen nach Anspruch 1, enthaltend die Verbindung der Formel IIa.

4. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formeln I und/oder IIa-e gemäß Anspruch 1 und der Verbindung der Formel III gemäß Anspruch 1 behandelt.

5. Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha mindestens einer Verbindung I und/oder IIa-e gemäß Anspruch 1 behandelt.

6. Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung III gemäß Anspruch 1 behandelt.

7. Verwendung der Verbindungen der Formeln I und/oder IIa-e gemäß Anspruch 1 zur Herstellung einer Mischung gemäß Anspruch 1.

8. Verwendung der Verbindung der Formel III gemäß Anspruch 1 zur Herstellung einer Mischung gemäß Anspruch 1.

## Claims

1. A fungicidal mixture, comprising

A) at least one active strobilurin compound selected from

a1) carbamates of the formula I

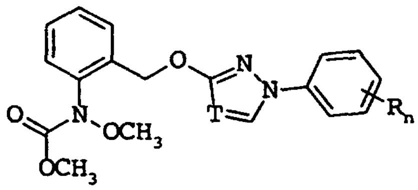

I

in which T is CH or N, n is 0, 1 or 2 and R is halogen, $C_1$-$C_4$-alkyl or $C_1$-$C_4$-haloalkyl, where the radicals R may be different if n is 2, and/or

a2) the phenyl acetic acid derivatives of the formulae IIa to IIe

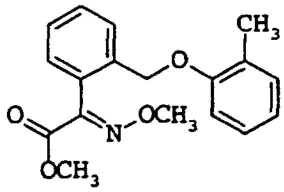

IIa

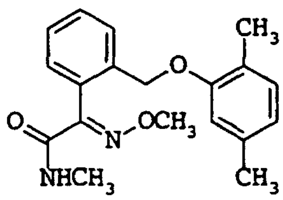

IIb

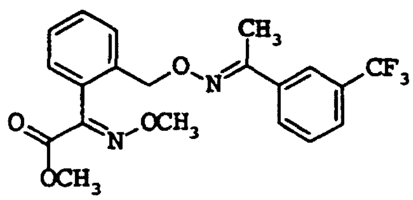

IIc

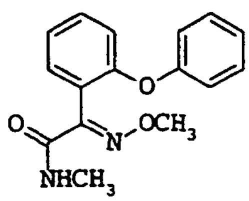

IId

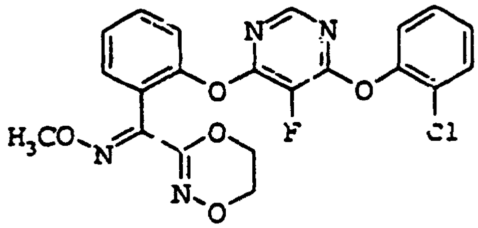

IIe

and

B) the compound of the formula III

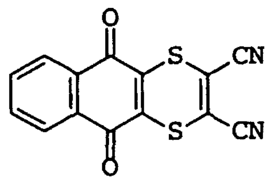

III

in a synergistically effective amount.

**2.** A fungicidal mixture as claimed in claim 1, comprising the compound 1.32.

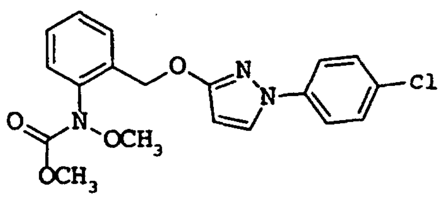

I.32

**3.** A fungicidal mixture as claimed in claim 1, comprising the compound of the formula IIa.

**4.** A method for controlling harmful fungi, which comprises treating the harmful fungi, their habitat, or the plants, seeds, soils, areas, materials or spaces to be kept free from them with a compound of the formula I and/or IIa-e as set forth in claim 1 and the compound of the formula III as set forth in claim 1.

**5.** A method as claimed in claim 4, which comprises treating the harmful fungi, their habitat or the plants, seeds, soils, areas, materials or spaces to be kept free from them with from 5 to 500 g/ha of at least one compound I and/or IIa-e as set forth in claim 1.

**6.** A process as claimed in claim 4, which comprises treating the harmful fungi, their habitat, or the plants, seeds, soils, areas, materials or spaces to be kept free from them with from 5 to 2000 g/ha of the compound III as set forth in claim 1.

**7.** The use of the compounds of the formulae I and/or IIa-e as set forth in claim 1 for preparing a mixture as claimed in claim 1.

**8.** The use of the compound of the formula III as set forth in claim 1 for preparing a mixture as claimed in claim 1.

## Revendications

**1.** Mélange fongicide, contenant

A) au moins une substance active de strobilurine, choisie parmi

a1) des carbamates de la formule I :

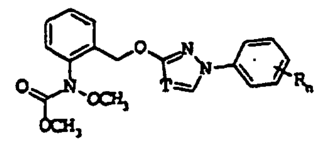

I

dans laquelle T représente CH ou N, n a une valeur de 0, 1 ou 2, R représente de l'halogène ou un groupe alkyle en $C_1$-$C_4$ ou halogénoalkyle en $C_1$-$C_4$, les radicaux R pouvant être différents lorsque n vaut 2, et/ou

a2) les dérivés d'acide phénylacétique des formules IIa à IIe :

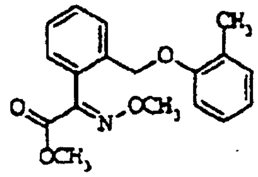

IIa

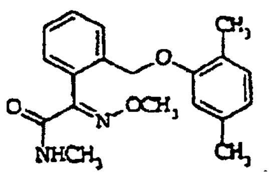

IIb

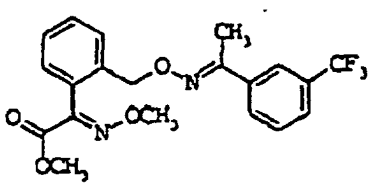

IIc

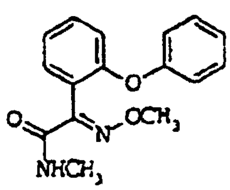

IId

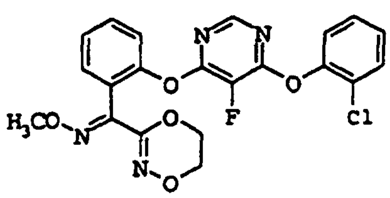

IIe

et

B) le composé de la formule III :

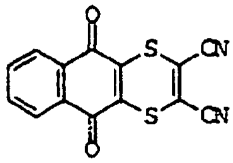

III

en une quantité active du point de vue synergique.

**2.** Mélanges fongicides suivant la revendication 1, contenant le composé I.32 :

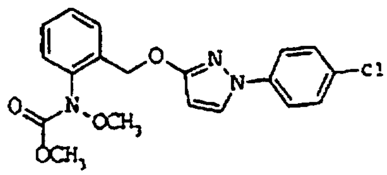

I.32

**3.** Mélanges fongicides suivant la revendication 1, contenant le composé de la formule IIa.

**4.** Procédé pour lutter contre des champignons nuisibles, **caractérisé en ce qu'**on traite les champignons nuisibles, leur biotope ou les plantes, semences, sols, surfaces, matériels ou espaces à maintenir exempts de ces champignons avec un composé des formules I et/ou IIa-e suivant la revendication 1 et le composé de la formule III suivant la revendication 1.

**5.** Procédé suivant la revendication 4, **caractérisé en ce qu'**on traite les champignons nuisibles, leur biotope ou les plantes, semences, sols, surfaces, matériels ou espaces à maintenir exempts de ces champignons par 5 à 500 g/ha d'au moins un composé I et/ou IIa-e suivant la revendication 1.

**6.** Procédé suivant la revendication 4, **caractérisé en ce qu'**on traite les champignons nuisibles, leur biotope ou les plantes, semences, sols, surfaces, matériels ou espaces à maintenir exempts de ces champignons par 5 à 2000 g/ha du composé III suivant la revendication 1.

**7.** Utilisation des composés des formules I et/ou IIa-e suivant la revendication 1, pour la fabrication d'un mélange suivant la revendication 1.

**8.** Utilisation du composé de la formule III suivant la revendication 1, pour la fabrication d'un mélange suivant la revendication 1.